# EUROPEAN PATENT APPLICATION

(11) **EP 4 670 896 A1**
(43) Date of publication of application: **31.12.2025**
(21) Application number: 24760430.9
(22) Date of filing: 22.02.2024
(51) Int. Cl.: B23K 20/04, B23K 103/10

(54) **ALUMINUM ALLOY PLATE AND METHOD FOR PRODUCING SAME**

(30) Priority: 22.02.2023 JP 2023025877
(71) Applicant: UACJ Corporation, Chiyoda-ku Tokyo 100-0004 (JP)
(72) Inventor: TOYAMA Morito, Tokyo 100-0004 (JP); FUNATO Yasushi, Tokyo 100-0004 (JP); FUKUCHI Akira, Tokyo 100-0004 (JP); OKADA Toshiya, Tokyo 100-0004 (JP)
(74) Representative: Gulde & Partner
(86) International application number: PCT/JP2024/006464
(87) International publication number: WO 2024/177132

(57) **Abstract**

An aluminum alloy substrate 100 that is a rolled plate includes a first aluminum alloy 10 and second aluminum alloys 20, 21 that include a chemical component different from a chemical component of the first aluminum alloy 10 and are joined to the first aluminum alloy 10. The first aluminum alloy 10 and the second aluminum alloys 20, 21 are joined along a plate surface direction of the aluminum alloy substrate 100.

## Description

### TECHNICAL FIELD

The present disclosure relates to an aluminum alloy substrate and a method of producing the same.

### BACKGROUND ART

The technology described in Patent Document 1 has been known as one example of an aluminum alloy substrate and a method of producing the same. Specifically, a method of producing an aluminum alloy substrate (an aluminum alloy cladding material) is described in Patent Document 1. In the method, a core material of an aluminum alloy and a first skin material of an Al-Zn alloy are overlapped in a thickness direction and are subjected to cladding rolling. Accordingly, an aluminum alloy substrate including the core material and the first skin material that are overlapped in the thickness direction is obtained.

### PRIOR ART DOCUMENT

### Patent Document

Patent Document 1: Japanese Unexamined Patent Application Publication No. 2016-182616

### SUMMARY OF THE INVENTION

### Problem to be Solved by the Invention

However, in the technology disclosed in Patent Document 1, the core material and the first skin material are overlapped in the thickness direction and therefore, characteristics of each of the core material and the first skin material are less likely to be exerted on a plate surface of the aluminum alloy substrate.

The present technology was made in view of the above circumstances. An object is to provide an aluminum alloy substrate that has characteristics of multiple aluminum alloys on a plate surface and a method of producing the same.

### Means for Solving the Problem

The present disclosure is an aluminum alloy substrate that is a rolled plate and the aluminum alloy substrate includes a first aluminum alloy and a second aluminum alloy that includes a chemical component different from a chemical component of the first aluminum alloy and is joined to the first aluminum alloy. The first aluminum alloy and the second aluminum alloy are joined adjacent to each other along a plate surface direction of the aluminum alloy substrate.

According to such a configuration, the rolled plate has two kinds of alloys having different characteristics on the plate surface of the aluminum alloy substrate.

In the above configuration, purity of aluminum may differ between the second aluminum alloy and the first aluminum alloy.

According to such an aluminum alloy substrate, for instance, with high purity aluminum being used as the material of the first aluminum alloy (within a range of purity so as to be industrially produced with mass production at a low cost) and low purity aluminum including relatively a large amount of elements other than aluminum being used as the material of the second aluminum alloy, the characteristics of the second aluminum alloy can be exerted with achieving a low cost with the first aluminum.

In the above configuration, a content of an additional element may differ between the second aluminum alloy and the first aluminum alloy.

According to such an aluminum alloy substrate, two kinds of alloys having different characteristics based on the content of the additional element are on the plate surface of the rolled plate.

In the above configuration, a content of an additional element that affects alumite coating may differ between the second aluminum alloy and the first aluminum alloy.

According to such an aluminum alloy substrate, two kinds of alloys having different characteristics based on the content of the additional element that affects alumite coating (for instance, different colors are exhibited through the alumite coating) are on the plate surface of the rolled plate.

In the above configuration, a content of an additional element that affects mechanical characteristics may differ between the second aluminum alloy and the first aluminum alloy.

According to such an aluminum alloy substrate, two kinds of alloys having different characteristics based on the content of the additional element that affects mechanical characteristics are on the plate surface of the rolled plate.

In the above configuration, a content of an additional element that affects tensile strength may differ between the second aluminum alloy and the first aluminum alloy.

According to such an aluminum alloy substrate, two kinds of alloys having different characteristics based on the content of the additional element that affects tensile strength out of the mechanical characteristics are on the plate surface of the rolled plate.

In the above configuration, a content of an additional element that affects a melting point may differ between the second aluminum alloy and the first aluminum alloy.

According to such an aluminum alloy substrate, two kinds of alloys having different characteristics based on the content of the additional element that affects a melting point are on the plate surface of the rolled plate. For instance, with the melting point of the second aluminum alloy being lower than the melting point of the first aluminum alloy, the second aluminum alloy is to be melted and joined to other member and the first aluminum alloy can have characteristics other than joining properties that are superior to the second aluminum alloy. Without lowering the melting point of the first aluminum alloy, the aluminum alloy substrate can be joined to other members. Therefore, material for the first aluminum alloy can be selected from a wide variety. As a result, the aluminum alloy substrate that has both joining properties and other characteristics can be produced.

In the above configuration, a content of an additional element that affects a crystal form may differ between the second aluminum alloy and the first aluminum alloy.

According to such an aluminum alloy substrate, two kinds of alloys having different characteristics based on the content of the additional element that affects a crystal form (an average particle diameter and a shape) are on the plate surface 100A of the rolled plate.

In the above configuration, a content of an additional element that affects corrosion resistance may differ between the second aluminum alloy and the first aluminum alloy.

According to such an aluminum alloy substrate, two kinds of alloys having different characteristics based on the content of the additional element that affects corrosion resistance are on the plate surface of the rolled plate.

In the above configuration, a content of an additional element that affects conductivity may differ between the second aluminum alloy and the first aluminum alloy.

According to such an aluminum alloy substrate, two kinds of alloys having different characteristics based on the content of the additional element that affects conductivity are on the plate surface of the rolled plate. For instance, with the conductivity of the second aluminum alloy being higher than the conductivity of the first aluminum alloy, the first aluminum alloy can have characteristics other than conductivity that are superior to the second aluminum alloy. The conductivity of the first aluminum alloy need not be lowered and therefore, material for the first aluminum alloy can be selected from a wide variety. As a result, the aluminum alloy substrate that has both electric conductive properties and other characteristics can be produced.

The present disclosure is a method of producing an aluminum alloy substrate including a joining process of joining a second aluminum alloy having a chemical component different from a chemical component of a first aluminum alloy to the first aluminum alloy and forming a joined member and a rolling process of rolling the joined member to be in a plate shape. In the joining process, the first aluminum alloy and the second aluminum alloy are joined so as to be adjacent to each other along a plate surface direction of the aluminum alloy substrate.

With such a producing method, the aluminum alloy substrate that is a rolled plate including two kinds of alloys having different characteristics on the plate surface is produced. After joining the second aluminum alloy to the first aluminum alloy, the joined member obtained through the joining is rolled and the aluminum alloy substrate is obtained. Therefore, the aluminum alloy substrate having increased joining strength between the first aluminum alloy and the second aluminum alloy is produced.

### Effects of the Invention

According to the present disclosure, an aluminum alloy substrate that has characteristics of multiple aluminum alloys on a plate surface and a method of producing the same can be provided.

### BRIEF DESCRIPTION OF THE DRAWINGS

[FIG. 1] a perspective view of an aluminum alloy substrate according to a first embodiment
[FIG. 2] a view of the aluminum alloy substrate seen from a Y-axis direction
[FIG. 3] a perspective view before an aluminum alloy is joined
[FIG. 4] a perspective view after the aluminum alloy is joined
[FIG. 5] a view illustrating a rolling process seen from an X-axis direction
[FIG. 6] a table illustrating chemical components of 2000 series aluminum alloys, 3000 series aluminum alloys, 4000 series aluminum alloys
[FIG. 7] a table illustrating chemical components of 5000 series aluminum alloys
[FIG. 8] a table illustrating chemical components of 6000 series aluminum alloys, 7000 series aluminum alloys
[FIG. 9] an upper view of a plate surface of an aluminum alloy substrate according to a second embodiment
[FIG. 10] an upper view of a plate surface of an aluminum alloy substrate according to a third embodiment

### MODES FOR CARRYING OUT THE INVENTION

### <First Embodiment>

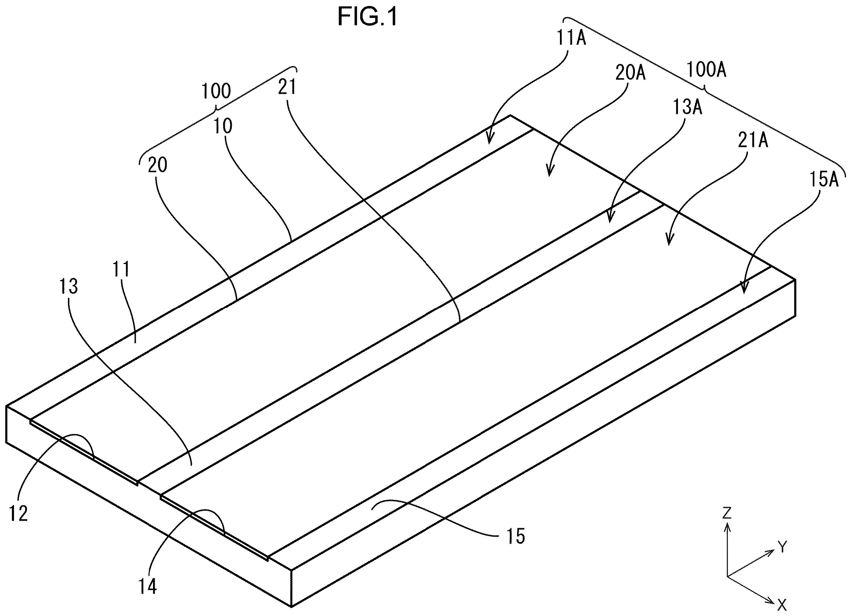

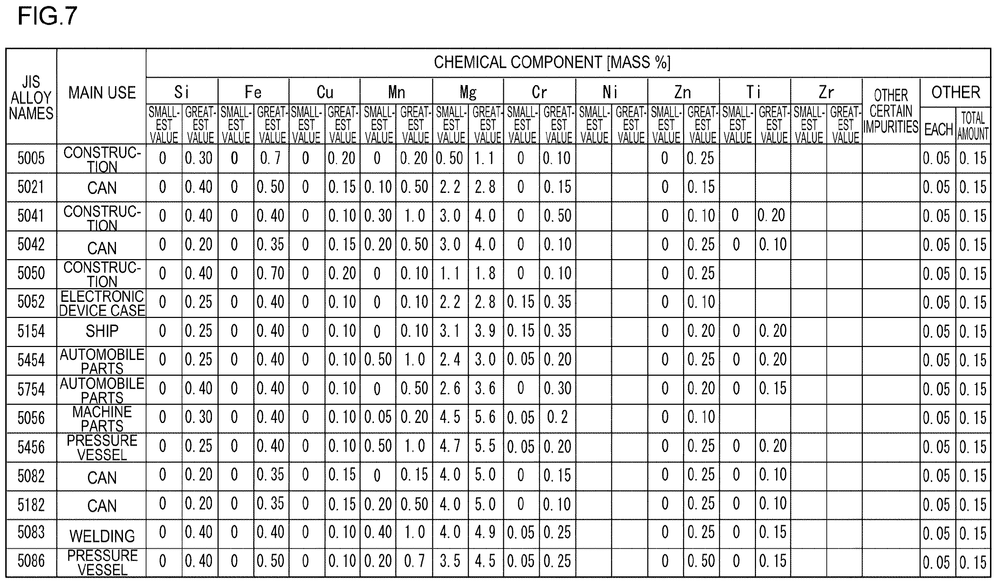

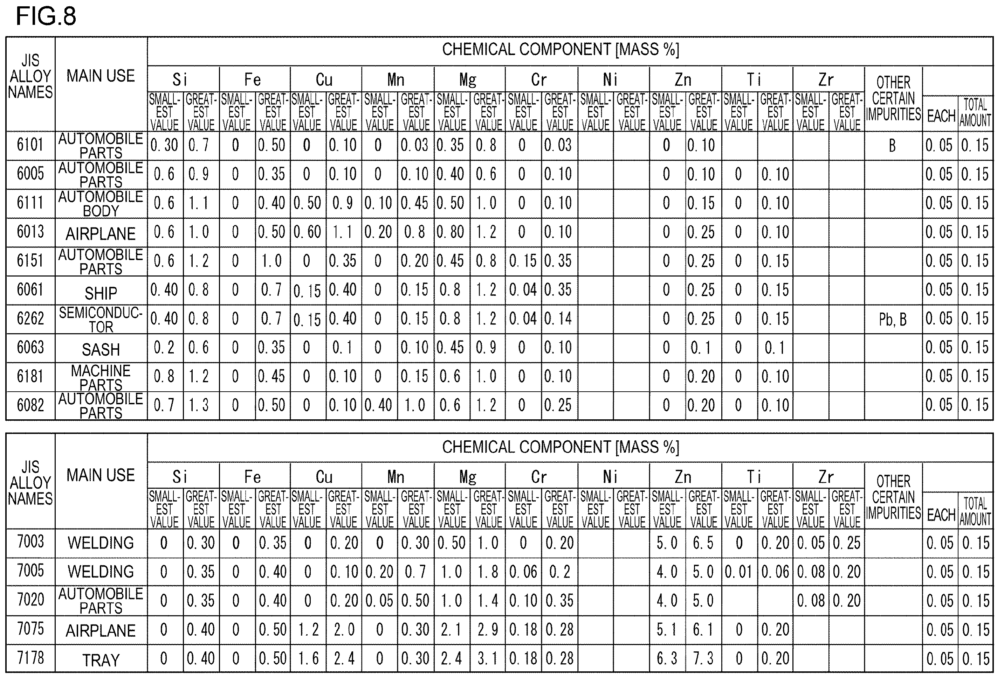

An aluminum alloy substrate 100 according to a first embodiment of the present disclosure will be described with reference to FIGS. 1 to 8. An X-axis, a Y-axis, and a Z-axis may be present in some of the drawings and each of the axial directions represents a direction represented in each drawing. A Z-axis direction corresponds to a plate thickness direction of the aluminum alloy substrate 100. An X-axis direction and a Y-axis direction correspond to directions crossing the plate thickness direction. Particularly, on a plate surface 100A of the aluminum alloy substrate 100, the X-axis direction or the Y-axis direction is referred to as a plate surface direction.

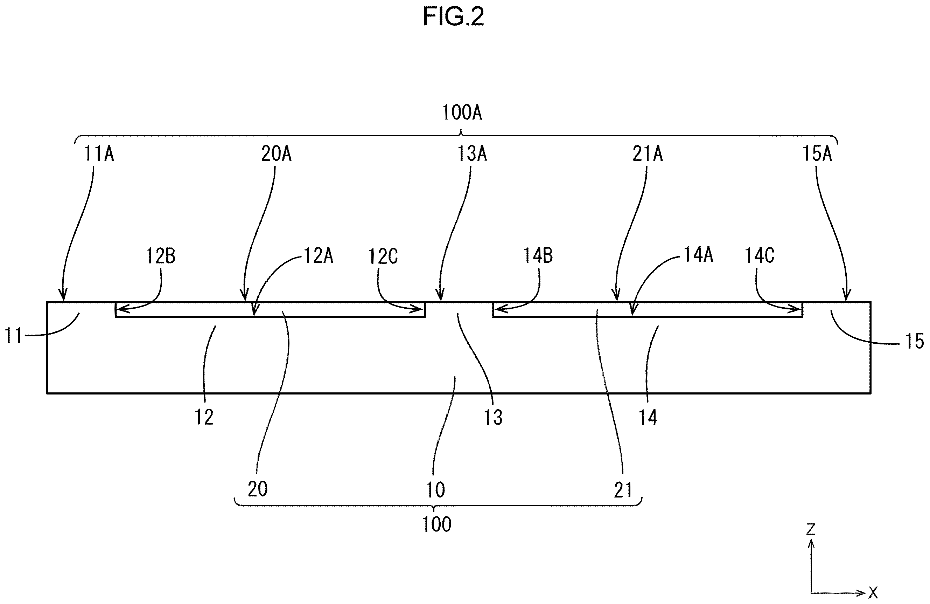

As illustrated in FIGS. 1 and 2, the aluminum alloy substrate 100 is a rolled plate obtained by rolling a joined member 30, which will be described later, to be elongated in the Y-axis direction so as to have an elongated plate shape with a long side and a short side extending along the Y-axis direction and the X-axis direction, respectively. The aluminum alloy substrate 100 includes a first aluminum alloy 10, two second aluminum alloys 20, 21 that are joined to the first aluminum alloy 10. The first aluminum alloy 10 is formed in a plate shape with a plate thickness direction corresponding to the Z-axis direction and a long side extending in the Y-axis direction. The first aluminum alloy 10 includes three projection portions 11, 13, 15 and two recess portions 12, 14 on the plate surface 100A side. The projection portions 11, 13, 15 and the recess portions 12, 14 extend in the Y-axis direction and are arranged in the X-axis direction. The recess portion 12 is between the two projection portions 11, 13 that are adjacent to each other in the X-axis direction. Similarly, the recess portion 14 is between the two projection portions 13, 15 that are adjacent to each other in the X-axis direction. The two second aluminum alloys 20, 21 are joined to the recess portions 12, 14, respectively.

Each of the second aluminum alloys 20, 21 is formed in a plate shape with a plate thickness direction corresponding to the Z-axis direction and a long side extending in the Y-axis direction. The plate thickness of the second aluminum alloys 20, 21 is smaller than the plate thickness of the first aluminum alloy 10. Upper surfaces (plate surfaces) 20A, 21A of the second aluminum alloys 20, 21 are on the same plane as upper surfaces 11A, 13A, 15A of the projection portions 11, 13, 15. The upper surfaces 20A, 21A of the second aluminum alloys 20, 21 and the upper surfaces 11A, 13A, 15A of the projection portions 11, 13, 15 are configured as the plate surface (an upper surface) 100A of the aluminum alloy substrate 100.

The first aluminum alloy 10 and the second aluminum alloys 20, 21 are joined so as to be adjacent to each other in the X-axis direction that corresponds to one of the plate surface directions of the aluminum alloy substrate 100. On the plate surface 100A of the aluminum alloy substrate 100, the upper surface 11A of the projection portion 11, the upper surface 20A of the second aluminum alloy 20, the upper surface 13A of the projection portion 13, the upper surface 21A of the second aluminum alloy 21, and the upper surface 15A of the projection portion 15 are arranged adjacent to each other in this order in the X-axis direction.

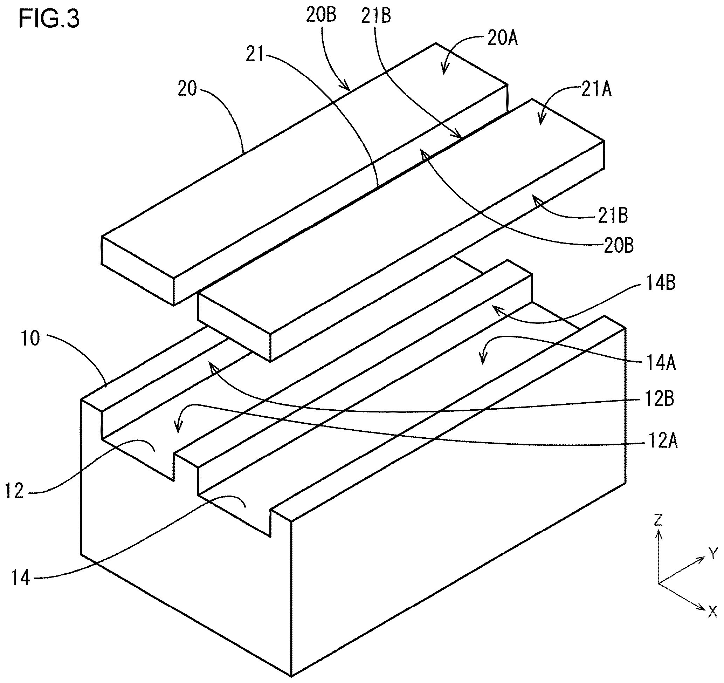

Side surfaces 20B of the second aluminum alloy 20 with respect to the X-axis direction (refer to FIG. 3) are joined to walls 12B, 12C extending upward from a bottom wall 12A of the recess portion 12. A lower bottom surface of the second aluminum alloy 20 with respect to the Z-axis direction is joined to the bottom wall 12A of the recess portion 12. The walls 12B, 12C may extend vertically from the bottom wall 12A or may extend to be farther away from each other with respect to the X-axis direction in a tapered form as they extend upward. Specifically, the walls 12B, 12C may be inclined with respect to a vertical line, which vertically crosses the bottom wall 12A, at an inclination angle (a taper angle) and the inclination angle may be zero or greater and 30 degrees or smaller, and preferably 1 degree or greater and 30 degrees or smaller (with the inclination angle being zero, the walls 12B, 12C vertically extends from the bottom wall 12A). The second aluminum alloy 20 has a shape following a recessed shape of the recess portion 12. With the recess portion 12 having a tapered shape, the second aluminum alloy 20 also has a tapered shape accordingly (such that the side surfaces 20B are inclined at the inclination angle same as that of the walls 12B, 12C).

Similarly, side surfaces 21B of the second aluminum alloy 21 with respect to the X-axis direction (refer to FIG. 3) are joined to walls 14B, 14C extending upward from a bottom wall 14A of the recess portion 14. A lower bottom surface of the second aluminum alloy 21 with respect to the Z-axis direction is joined to the bottom wall 14A of the recess portion 14. The walls 14B, 14C may extend vertically from the bottom wall 14A or may extend to be farther away from each other in a tapered form as they extend upward. Specifically, the walls 14B, 42C may be inclined with respect to a vertical line, which vertically crosses the bottom wall 14A, at an inclination angle (a taper angle) and the inclination angle may be zero or greater and 30 degrees or smaller, and preferably 1 degree or greater and 30 degrees or smaller (with the inclination angle being zero, the walls 14B, 14C vertically extends from the bottom wall 14A). The second aluminum alloy 21 has a shape following a recessed shape of the recess portion 14. With the recess portion 14 having a tapered shape, the second aluminum alloy 21 also has a tapered shape accordingly (such that the side surfaces 21B are inclined at the inclination angle same as that of the walls 14B, 14C).

Material of the first aluminum alloy 10 and the second aluminum alloys 20, 21 is not particularly limited as long as the material is an alloy containing aluminum as a main component. The material of the second aluminum alloys 20, 21 has chemical components different from those of the first aluminum alloy 10. The chemical components of the material of the second aluminum alloy 20 may be same as or different from those of the second aluminum alloy 21.

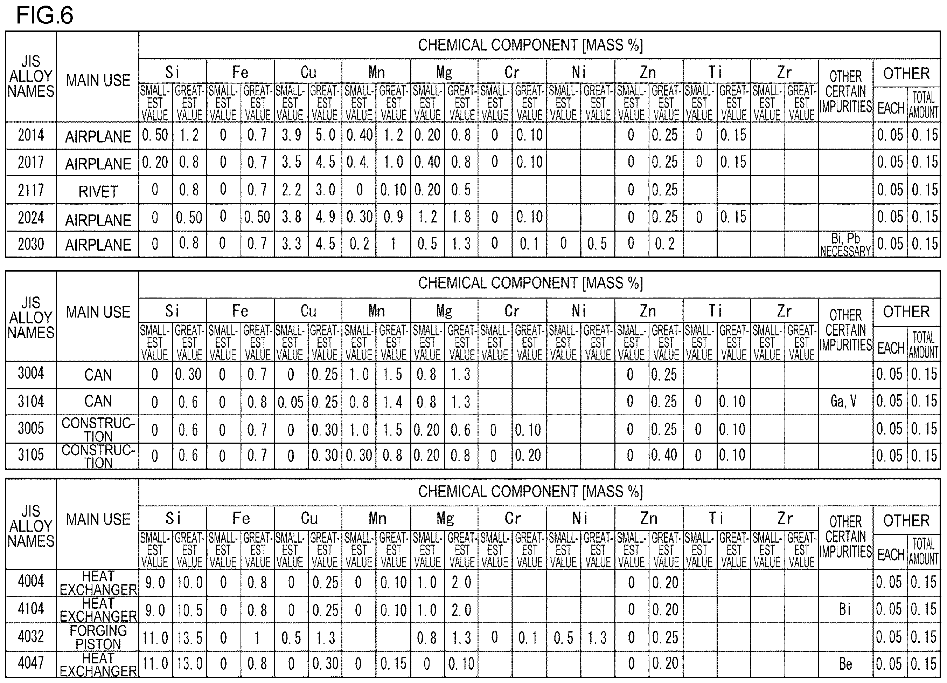

Specifically, as illustrated in FIGS. 6 to 8, any one of groups of the following aluminum alloys may be used as the material of the first aluminum alloy 10 and the second aluminum alloys 20, 21. Such aluminum alloys include 2000 series aluminum alloys such as JIS 2014, 2017, 2117, 2024, 2030, 3000 series aluminum alloys such as JIS 3004, 3104, 3005, 3105, 4000 series aluminum alloys such as JIS 4004, 4104, 4032, 4047, 5000 series aluminum alloys such as JIS 5005, 5021, 5041, 5042, 5050, 5052, 5154, 5454, 5754, 5056, 5456, 5082, 5182, 5083, 5086, 6000 series aluminum alloys such as JIS 6101, 6005, 6111, 6013, 6151, 6061, 6262, 6063, 6181, 6082, and 7000 series aluminum alloys such as JIS 7003, 7005, 7020, 7075, 7178. Further, in addition to the above aluminum alloys, any one of groups of 1000 series aluminum alloys such as JIS 1050, 1070, 1085, 1100, 1230, 1200 and 8000 series aluminum alloys such as JIS 8021, 8079 may be used as the material of the first aluminum alloy 10 and the second aluminum alloys 20, 21.

Purity of aluminum of the second aluminum alloys 20, 21 differs from purity of aluminum of the first aluminum alloy 10. For instance, purity of aluminum of the second aluminum alloys 20, 21 may be lower or higher than purity of aluminum of the first aluminum alloy 10.

The content of additional elements (elements other than aluminum) in the second aluminum alloys 20, 21 differs from the content of additional elements in the first aluminum alloy 10. For instance, in the group of elements including Ag, Au, Co, Cr, Cu, Fe, Mg, Mn, Mo, Sc, Si, Sn, Zn, Ti, Ni, Zr, Li, Be, Bi, Pb, and B, the content of one kind or two or more kinds of the elements differs between the second aluminum alloys 20, 21 and the first aluminum alloy 10. The content of the additional elements in the second aluminum alloys 20, 21 may be greater or smaller than that in the first aluminum alloy 10.

The content of the additional element that affects alumite coating in the second aluminum alloys 20, 21 differs from the content of the additional element in the first aluminum alloy 10. One kind or two or more kinds of elements in the element group including Ag, Au, Co, Cu, Fe, Mo, and Sn are used as the additional element affecting alumite coating. The phrase of "affecting alumite coating" may mean that formation of an oxide film differs when an aluminum alloy is subjected to alumite coating or change in corrosion, hardness, insulation, or coloring, for instance, differs when an aluminum alloy is subjected to alumite coating. Regarding the change in coloring, for instance, when a certain aluminum alloy is subjected to alumite coating with oxalic acid bath to form an oxide film having a thickness of 25 µm, the aluminum alloy that contains Mg of 5.0 mass % and Mn of 0.5 mass % exhibits brownish yellow with being subjected to the alumite coating and the aluminum alloy that contains Cu of 4.0 mass %, Mg of 0.6 mass %, and Mn of 0.5 mass % exhibits bluish white with being subjected to the alumite coating. Other additional elements affecting alumite coating include Mg, Cr, Ti.

The content of the additional element that affects mechanical characteristics in the second aluminum alloys 20, 21 differs from the content of the additional element in the first aluminum alloy 10. One kind or two or more kinds of elements in the element group including Cu, Mg, Mn, Si, Cr, Fe, Ni, Zr, and Zn are used as the additional element affecting mechanical characteristics. The mechanical characteristics (including mechanical characteristics in a relatively high temperature atmosphere) may be one or two or more characteristics in a group including delay, strength, machinability, moldability (including bendability), abrasion resistance, fatigue resistance, fracture toughness, shock resistance, hardness, Young's modulus, and tensile strength. For instance, with Cu being added to an aluminum alloy, strength and machinability are increased, with Mn being added to an aluminum alloy, strength, corrosion resistance, and moldability are increased, with Si being added to an aluminum alloy, abrasion resistance and heat resistance are increased, with Mg being added to an aluminum alloy, moldability, weldability, and halotolerance are increased, with Mg and Si being added to an aluminum alloy, strength and corrosion resistance are increased, and with Zn and Mg being added to an aluminum alloy, strength is increased. For instance, with Cu, Pb, Sn, and Bi being added to an aluminum alloy, machinability is increased. The elements affecting mechanical characteristics may be elements that contribute to modification of a matrix (an average particle diameter or a shape) or may be elements for distributing second phase particles.

The content of the additional element that affects tensile strength in the second aluminum alloys 20, 21 differs from the content of the additional element in the first aluminum alloy 10. One kind or two or more kinds of elements in the element group including Cu, Mg, Mn, Si, Zn, Sc, and Fe are used as the additional element affecting tensile strength. With at least one of Mn, Mg, and Fe being included in an aluminum alloy, tensile strength is increased due to solid solution hardening or precipitation hardening. With at least one of Cu, Si, Zn, and Sc being included in an aluminum alloy, tensile strength is increased due to precipitation hardening.

The content of the additional element that affects a melting point in the second aluminum alloys 20, 21 differs from the content of the additional element in the first aluminum alloy 10. An example of the additional elements affecting a melting point is Si. For instance, the second aluminum alloys 20, 21 may be 4000 series aluminum alloys whose melting point is adjusted by including Si and the first aluminum alloy 10 may be an aluminum alloy of series other than 4000 series.

The content of the additional element that affects a crystal form in the second aluminum alloys 20, 21 differs from the content of the additional element in the first aluminum alloy 10. One kind or two or more kinds of elements in the element group including Cr, Mn, Sc, and Zr are used as the additional element affecting a crystal form. Since aluminum alloys are polycrystalline, examples of a crystal form include an average particle diameter and a shape of each crystal. A polycrystal of an aluminum alloy is elongated in a rolling process, which will be described later, and becomes a form of fibers; however, if a polycrystal of an aluminum alloy is heated with intermediate annealing, the form of fibers tries to recover the original shape of crystals (recrystallization). At this time, polycrystals of an aluminum alloy try to keep the form of fibers and this effect is called pinning effect. For instance, if the content of Cu in an aluminum alloy is large, the pinning effect is accelerated and recrystallization is suppressed (aluminum alloy is more likely to keep the form of fibers). If the content of Cu in an aluminum alloy is small, the pinning effect is suppressed and recrystallization is accelerated (aluminum alloy is less likely to keep the form of fibers). Therefore, the additional elements affecting a crystal form may be elements that affect acceleration of the pinning effect or suppressing of recrystallization. The additional elements may be elements that affect a crystal form of a base material of an aluminum alloy.

The content of the additional element that affects corrosion resistance in the second aluminum alloys 20, 21 differs from the content of the additional element in the first aluminum alloy 10. One kind or two or more kinds of elements in the element group including Cu, Mn, Si, and Zn are used as the additional element affecting corrosion resistance. By adjusting the amount of the additional elements, a potential difference is created between the first aluminum alloy 10 and the second aluminum alloy 20 and one of the first aluminum alloy 10 and the second aluminum alloy 20 is protected from corrosion with sacrificial protection.

The content of the additional element that affects conductivity in the second aluminum alloys 20, 21 differs from the content of the additional element in the first aluminum alloy 10. One kind or two or more kinds of elements in the element group including Cu, Mg, Mn, Fe, Si, and Zn are used as the additional element affecting conductivity. As the content of such an additional element is increased, the conductivity of an aluminum alloy decreases. Particularly, Mn, Mg, and Si decreases conductivity much more than Cu, Zn, and Fe. For instance, with the content of Mn in the second aluminum alloys 20, 21 being greater than that in the first aluminum alloy 10, the conductivity of the second aluminum alloys 20, 21 is lower than that of the first aluminum alloy 10.

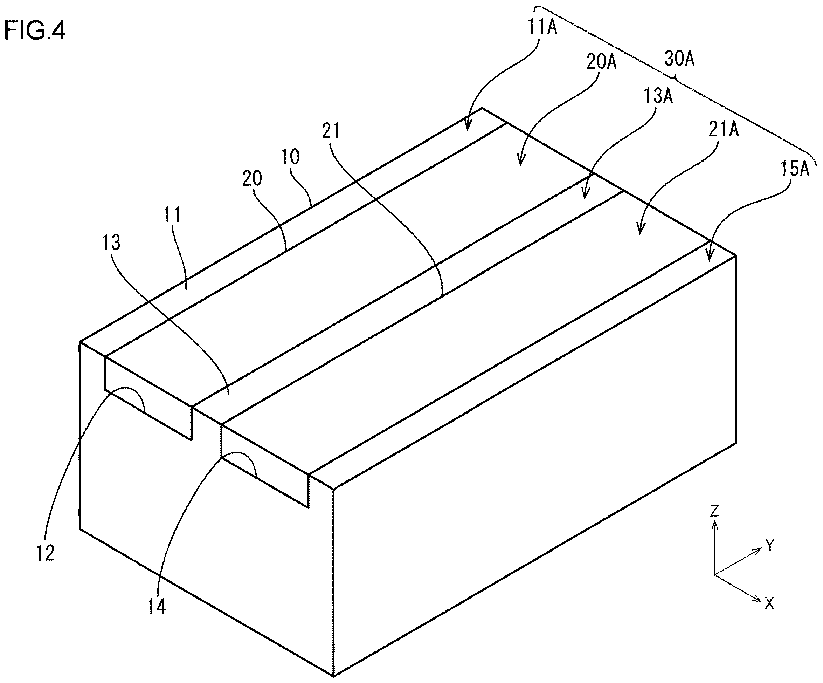

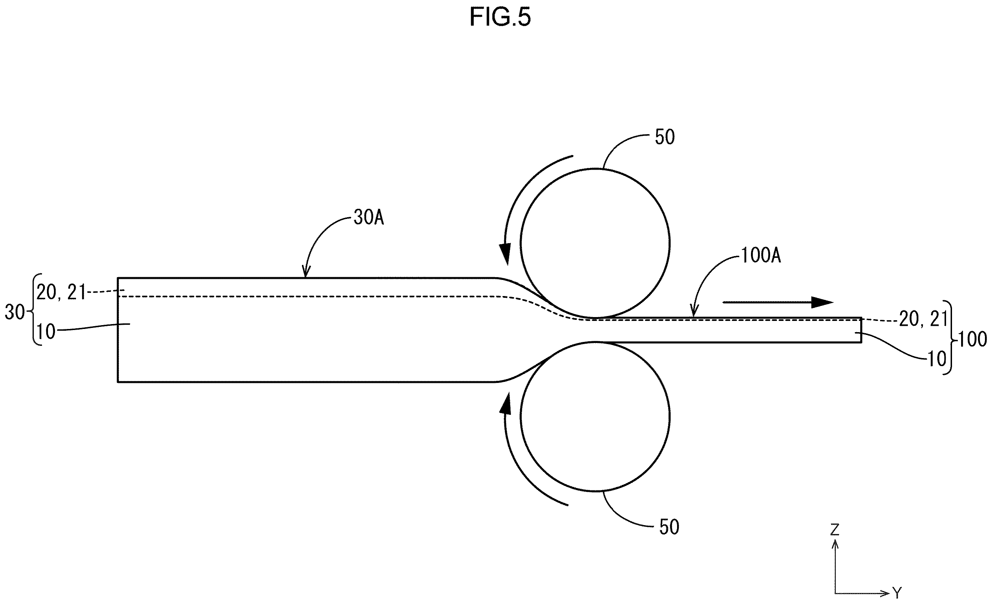

Next, a method of producing the aluminum alloy substrate 100 will be described. The method of producing the aluminum alloy substrate 100 includes a preparation process of preparing the first aluminum alloy 10 and the second aluminum alloys 20, 21, a joining process (forge welding process) of joining the second aluminum alloys 20, 21 to the first aluminum alloy 10 (with forge welding) and forming the joined member 30 as illustrated in FIGS. 3 and 4, and a rolling process of rolling the joined member 30 to be formed in a plate shape as illustrated in FIG. 5.

In the preparation process, an aluminum alloy material of a certain chemical component is casted continuously and an ingot is formed, for instance, and homogenization is performed as necessary. Then, the ingot is subjected to hot rolling, for instance, and the first aluminum alloy 10 and the second aluminum alloys 20, 21 are formed. The two recess portions 12, 14 are formed in the first aluminum alloy 10 with cutting.

Next, as illustrated in FIGS. 3 and 4, in the joining process, with the first aluminum alloy 10 and the second aluminum alloys 20, 21 being heated at a predefined temperature and pressed with a predetermined pressure, the second aluminum alloys 20, 21 are inserted in the recess portions 12, 14, respectively. Specifically, with the side surfaces 20B, 21B of the second aluminum alloys 20, 21 with respect to the X-axis direction being contacted with the walls 12B, 12C and 14B, 14C (refer to FIG. 2) of the recess portions 12, 14, respectively, the first aluminum alloy 10 and the second aluminum alloys 20, 21 are heated. Thereafter (or at the same time as heating), the second aluminum alloys 20, 21 are pressed to be inserted in the recess portions 12, 14, respectively (this process is referred to as the forge welding). The heating temperature may be the melting point of the aluminum alloy of the first aluminum alloy 10 and the second aluminum alloys 20, 21 or lower, or may be 250 degrees or higher and 500 degrees or lower, or may be 300 degrees or higher and 450 degrees or lower, or may be 350 degrees or higher and 420 degrees or lower. The pressure with which the second aluminum alloys 20, 21 are pushed is a pressure such that the second aluminum alloys 20, 21 can be plastically deformed in the recess portions 12, 14 (a pressure higher than deformation resistance in hot rolling). Within such ranges, the oxide films are broken on the contact surfaces of the first aluminum alloy 10 and the second aluminum alloys 20, 21 and aluminum new surfaces are exposed on the contact surfaces. Thus, the contact portions (the side surfaces 20B, 21B of the second aluminum alloys 20, 21 and the walls 12B, 12C, 14B, 14C of the recess portions 12, 14) are joined with metal joining.

Then, by pushing the second aluminum alloys 20, 21 until bottom surfaces (lower surfaces) of the second aluminum alloys 20, 21 reach the bottom walls 12A, 14A of the recess portions 12, 14, the joined member 30 is formed such that the first aluminum alloy 10 and the second aluminum alloys 20, 21 are joined adjacent to each other in the X-axis direction, which is one of the plate surface directions of the aluminum alloy substrate 100, as illustrated in FIG. 4. On the upper surface of the joined member 30, the upper surface 11A of the projection portion 11, the upper surface 20A of the second aluminum alloy 20, the upper surface 13A of the projection portion 13, the upper surface 21A of the second aluminum alloy 21, and the upper surfaces 15A of the projection portion 15 are arranged next to each other in this order in the X-axis direction.

Next, in the rolling process, by sequentially performing heat rolling, cold rolling, intermediate annealing, and cold rolling, the joined member 30 is rolled and elongated to be transformed into a rolled plate and the aluminum alloy substrate 100 is formed. In the hot rolling and the cold rolling, as illustrated in FIG. 5, with pressure being applied to an upper surface 30A (and a lower surface) of the joined member 30 in the Z-axis direction by a pair of rollers 50, 50, the joined member 30 is rolled to be elongated in the Y-axis direction. Accordingly, the aluminum alloy substrate 100 having the plate surface 100A that includes the upper surfaces 20A, 21A of the second aluminum alloys 20, 21 and the upper surfaces 11A, 13A, 15A of the projection portions 11, 13, 15 is produced.

For the preparation process and the rolling process, the method similar to the known method may be used depending on the kind of an aluminum alloy used in the processes. For instance, with the JIS 1000 series aluminum alloy being used, the method described in Japanese Unexamined Patent Application Publication No. 2017-172034 may be used. With the JIS 2000 series aluminum alloy being used, the method described in Japanese Unexamined Patent Application Publication No. 2013-116474 or Japanese Unexamined Patent Application Publication No. 2010-159488 may be used. With the JIS 3000 series aluminum alloy being used, the method described in Japanese Patent No. 6912886, Japanese Unexamined Patent Application Publication No. 2020-33632, Japanese Patent No. 6667189, WO 2019/058935, WO 2019/066049, or Japanese Unexamined Patent Application Publication No. 2018-3074 may be used. With the JIS 4000 series aluminum alloy being used, the method described in Japanese Patent No. 6649889, Japanese Patent No. 5698416, Japanese Patent No. 5602747, Japanese Unexamined Patent Application Publication No. 2013-116473, Japanese Patent No. 5261214, Japanese Patent No. 4636520, or Japanese Patent No. 3982849 may be used. With the JIS 5000 series aluminum alloy being used, the method described in Japanese Patent No. 6961395, Japanese Patent No. 5944862, Japanese Unexamined Patent Application Publication No. 2013-12362, Japanese Unexamined Patent Application Publication No. 2009-148823, Japanese Unexamined Patent Application Publication No. 2009-209426, or Japanese Unexamined Patent Application Publication No. 8-85880 may be used. With the JIS 6000 series aluminum alloy being used, the method described in Japanese Unexamined Patent Application Publication No. 2019-026876, Japanese Unexamined Patent Application Publication No. 2019-056163, Japanese Unexamined Patent Application Publication No. 2019-173118, Japanese Unexamined Patent Application Publication No. 2020-503428, WO 2018/003709, WO 2018/012597, WO 2019/021899, Japanese Patent No. 6452384, Japanese Patent No. 6467154, Japanese Patent No. 6512963, Japanese Patent No. 6581347, or Japanese Patent No. 6585435 may be used. With the JIS 7000 series aluminum alloy being used, the method described in WO 2021/070900, Japanese Patent No. 6979991, Japanese Patent No. 5431795, Japanese Patent No. 5276341, Japanese Patent No. 4669903, Japanese Patent No. 4736048, or Japanese Unexamined Patent Application Publication No. 2010-159489 may be used. With the JIS 8000 series aluminum alloy being used, the method described in Japanese Unexamined Patent Application Publication No. 2016-41831 may be used. With different series of aluminum alloys being used for the first aluminum alloy 10 and the second aluminum alloys 20, 21 (for instance, a 2000 series aluminum alloy is used for the first aluminum alloy 10 and a 3000 series aluminum alloy is used for the second aluminum alloys 20, 21), middle values of the production conditions such as a temperature and pressure in the preparation process and the rolling process (a middle value of the production condition for a 2000 series aluminum alloy and the production condition for a 3000 series aluminum alloy) may be used.

Next, effects of this embodiment will be described. In this embodiment, the aluminum alloy substrate 100 is a rolled plate that includes the first aluminum alloy 10 and the second aluminum alloys 20, 21. The second aluminum alloys 20, 21 include a chemical component different from that of the first aluminum alloy 10 and are joined to the first aluminum alloy 10. The first aluminum alloy 10 and the second aluminum alloys 20, 21 are arranged adjacent to each other in the plate surface direction of the aluminum alloy substrate 100 and joined together.

According to such a configuration, the rolled plate has two kinds of alloys having different characteristics on the plate surface 100A of the aluminum alloy substrate 100.

The purity of aluminum of the second aluminum alloys 20, 21 differs from that of the first aluminum alloy 10.

According to such an aluminum alloy substrate 100, for instance, with high purity aluminum being used as the material of the first aluminum alloy 10 (within a range of purity so as to be industrially produced with mass production at a low cost) and low purity aluminum including relatively a large amount of elements other than aluminum being used as the material of the second aluminum alloys 20, 21, the characteristics of the second aluminum alloys 20, 21 can be exerted with achieving a low cost with the first aluminum.

The content of an additional element in the second aluminum alloys 20, 21 differs from that in the first aluminum alloy 10.

According to such an aluminum alloy substrate 100, two kinds of alloys having different characteristics based on the content of the additional element are on the plate surface 100A of the rolled plate.

The content of the additional element affecting alumite coating in the second aluminum alloys 20, 21 differs from the content of the additional element in the first aluminum alloy 10.

According to such an aluminum alloy substrate 100, two kinds of alloys having different characteristics based on the content of the additional element that affects alumite coating (for instance, different colors are exhibited through the alumite coating) are on the plate surface 100A of the rolled plate.

The content of the additional element that affects mechanical characteristics in the second aluminum alloys 20, 21 differs from the content of the additional element in the first aluminum alloy 10.

According to such an aluminum alloy substrate 100, two kinds of alloys having different characteristics based on the content of the additional element that affects mechanical characteristics are on the plate surface 100A of the rolled plate.

The content of the additional element that affects tensile strength in the second aluminum alloys 20, 21 differs from the content of the additional element in the first aluminum alloy 10.

According to such an aluminum alloy substrate 100, two kinds of alloys having different characteristics based on the content of the additional element that affects tensile strength out of the mechanical characteristics are on the plate surface 100A of the rolled plate.

The content of the additional element that affects a melting point in the second aluminum alloys 20, 21 differs from the content of the additional element in the first aluminum alloy 10.

According to such an aluminum alloy substrate 100, two kinds of alloys having different characteristics based on the content of the additional element that affects a melting point are on the plate surface 100A of the rolled plate. For instance, with the melting point of the second aluminum alloys 20, 21 being lower than the melting point of the first aluminum alloy 10, the second aluminum alloys 20, 21 are to be melted and joined to other member and the first aluminum alloy 10 can have characteristics other than joining properties that are superior to the second aluminum alloys 20, 21. Without lowering the melting point of the first aluminum alloy 10, the aluminum alloy substrate 100 can be joined to other members. Therefore, material for the first aluminum alloy 10 can be selected from a wide variety. As a result, the aluminum alloy substrate 100 that has both joining properties and other characteristics can be produced.

The content of the additional element that affects a crystal form in the second aluminum alloys 20, 21 differs from the content of the additional element in the first aluminum alloy 10.

According to such an aluminum alloy substrate 100, two kinds of alloys having different characteristics based on the content of the additional element that affects a crystal form are on the plate surface 100A of the rolled plate.

The content of the additional element that affects corrosion resistance in the second aluminum alloys 20, 21 differs from the content of the additional element in the first aluminum alloy 10.

According to such an aluminum alloy substrate 100, two kinds of alloys having different characteristics based on the content of the additional element that affects corrosion resistance are on the plate surface 100A of the rolled plate.

The content of the additional element that affects conductivity in the second aluminum alloys 20, 21 differs from the content of the additional element in the first aluminum alloy 10.

According to such an aluminum alloy substrate 100, two kinds of alloys having different characteristics based on the content of the additional element that affects conductivity are on the plate surface 100A of the rolled plate. For instance, with the conductivity of the second aluminum alloys 20, 21 being higher than the conductivity of the first aluminum alloy 10, the first aluminum alloy 10 can have characteristics other than conductivity that are superior to the second aluminum alloys 20, 21. The conductivity of the first aluminum alloy 10 need not be lowered and therefore, material for the first aluminum alloy 10 can be selected from a wide variety. As a result, the aluminum alloy substrate 100 that has both electric conductive properties and other characteristics can be produced.

In this embodiment, the method of producing the aluminum alloy substrate 100 includes the joining process of joining the second aluminum alloys 20, 21 having a chemical component different from that of the first aluminum alloy 10 to the first aluminum alloy 10 and forming the joined member 30, and the rolling process of rolling the joined member to be in a plate shape. In the joining process, the first aluminum alloy 10 and the second aluminum alloys 20, 21 are joined together so as to be arranged adjacent to each other in the plate surface direction of the aluminum alloy substrate 100.

With such a producing method, the aluminum alloy substrate 100 that is a rolled plate including two kinds of alloys having different characteristics on the plate surface 100A is produced. After joining the second aluminum alloys 20, 21 to the first aluminum alloy 10, the joined member 30 obtained through the joining is rolled and the aluminum alloy substrate 100 is obtained. Therefore, the aluminum alloy substrate 100 having increased joining strength between the first aluminum alloy 10 and the second aluminum alloys 20, 21 is produced.

### <Second Embodiment>

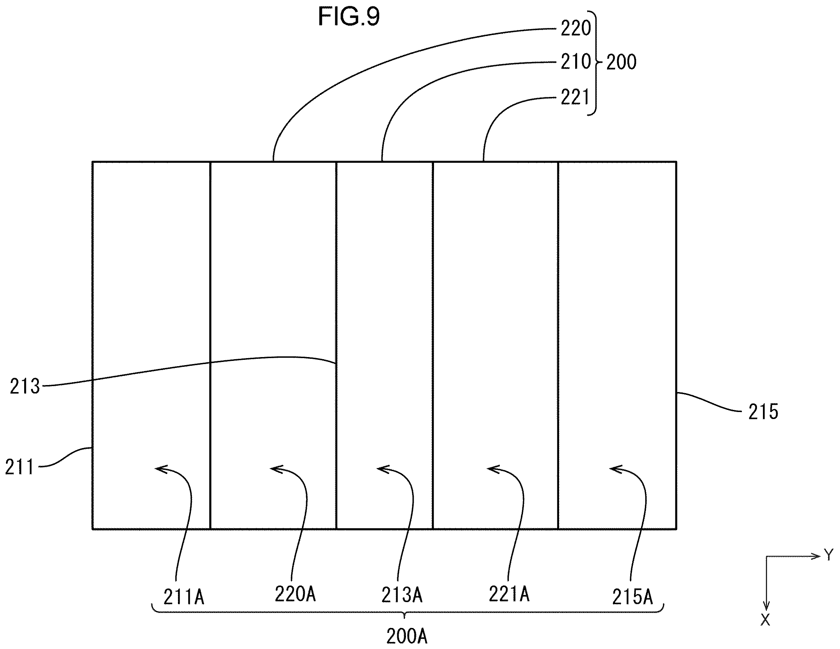

Next, a second embodiment of the present disclosure will be described with reference to FIG. 9. A front-back direction on the sheet corresponds to a thickness direction of an aluminum alloy substrate 200 and corresponds to the Z-axis direction in the first embodiment. The X-axis direction and the Y-axis direction cross the thickness direction.

The aluminum alloy substrate 200 is a rolled plate having an elongated plate shape and obtained by rolling a joined member to be elongated in the Y-axis direction. The aluminum alloy substrate 200 is an elongated plate member having long sides extending along the Y-axis direction and short sides extending along the X-axis direction. The aluminum alloy substrate 200 includes a first aluminum alloy 210 and two second aluminum alloys 220, 221 including a chemical component different from that of the first aluminum alloy 210 and joined to the first aluminum alloy 210. The first aluminum alloy 210 is a plate member having a plate thickness direction corresponding to the Z-axis direction and long sides extending along the Y-axis direction. The second aluminum alloys 220, 221 are plate members having a plate thickness direction corresponding to the Z-axis direction and long sides extending along the X-axis direction. The first aluminum alloy 210 includes three projection portions 211, 213, 215 that have a rectangular shape elongated in the X-axis direction seen from above and project frontward on the sheet and two recess portions (not illustrated) that have a rectangular shape elongated in the X-axis direction seen from above and are arranged among the three projection portions 211, 213, 215. On the front side of the two recess portions on the sheet, the second aluminum alloys 220, 221 are fitted in and joined to the recess portions with forge welding (the two recess portions are on the back side of the second aluminum alloys 220, 221 on the sheet in FIG. 9).

Upper surfaces (plate surfaces) 220A, 221A of the second aluminum alloys 220, 221 are on the same plane as upper surfaces 211A, 213A, 215A of the projection portions 211, 213, 215. The upper surfaces 220A, 221A of the second aluminum alloys 220, 221 and the upper surfaces 211A, 213A, 215A of the projection portions 211, 213, 215 are configured as a plate surface 200A of the aluminum alloy substrate 200. The first aluminum alloy 210 and the second aluminum alloys 220, 221 are joined so as to be adjacent to each other in the Y-axis direction that corresponds to one of the plate surface directions of the aluminum alloy substrate 200. On the plate surface 200A of the aluminum alloy substrate 200, the upper surface 211A of the projection portion 211, the upper surface 220A of the second aluminum alloy 220, the upper surface 213A of the projection portion 213, the upper surface 221A of the second aluminum alloy 221, and the upper surface 215A of the projection portion 215 are arranged adjacent to each other in this order in the Y-axis direction.

### <Third Embodiment>

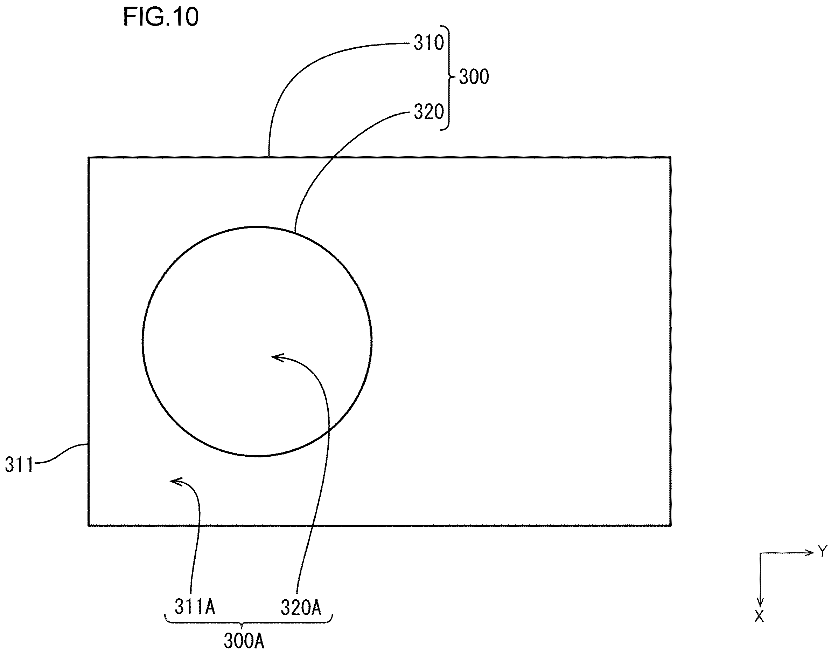

Next, a third embodiment of the present disclosure will be described with reference to FIG. 10. A front-back direction on the sheet corresponds to a thickness direction of an aluminum alloy substrate 300 and corresponds to the Z-axis direction in the first embodiment. The X-axis direction and the Y-axis direction cross the thickness direction.

The aluminum alloy substrate 300 is a rolled plate having an elongated plate shape and obtained by rolling a joined member to be elongated in the Y-axis direction. The aluminum alloy substrate 300 is an elongated plate member having long sides extending along the Y-axis direction and short sides extending along the X-axis direction. The aluminum alloy substrate 300 includes a first aluminum alloy 310 and a second aluminum alloy 320 that includes a chemical component different from that of the first aluminum alloy 310 and is joined to the first aluminum alloy 310. The first aluminum alloy 310 is a plate member having a plate thickness direction corresponding to the Z-axis direction and long sides extending along the Y-axis direction. The second aluminum alloy 320 is a circular plate member having a circular shape seen from above and a plate thickness direction corresponding to the Z-axis direction. The first aluminum alloy 310 includes a projection portion 311 projecting frontward on the sheet and a recess portion (not illustrated) recessed toward the back side on the sheet and has a circular shape seen from above. In front of the recess portion on the sheet, the second aluminum alloy 320 is fitted in and joined to the recess portion with forge welding and a side surface of the second aluminum alloy 320 having a circular plate shape is joined to the first aluminum alloy 310 (the recess portion is on the back side of the second aluminum alloy 320 on the sheet in FIG. 10).

An upper surface (a plate surface) 320A of the second aluminum alloy 320 is on the same plane as an upper surface 311A of the projection portion 311. The upper surface 320A of the second aluminum alloy 320 and the upper surface 311A of the projection portion 311 are configured as a plate surface 300A of the aluminum alloy substrate 300. The first aluminum alloy 310 and the second aluminum alloy 320 are joined so as to be adjacent to each other in the X-axis direction and the Y-axis direction that correspond to the plate surface direction of the aluminum alloy substrate 300.

### <Other Embodiments>

The present disclosure is not limited to the embodiments described above with reference to the drawings. For example, the following embodiments may be included in the technical scope of the present invention. The technical scope of the present disclosure may also include various modifications in the scope of claim or its equivalent scope.
(1) Other than the above embodiments, the number or the shape of the second aluminum alloys may be altered as appropriate. For instance, the number of the second aluminum alloys may be three or four or more, and two or more of the second aluminum alloys may include two or more kinds of aluminum alloys including different chemical components. The shape of the second aluminum alloy may be various kinds of shapes, for instance, a polygonal shape such as a square shape seen from above, a cross shape, and an irregular shape.
(2) In the above embodiments, JIS 2000 series to 7000 series aluminum alloys are described as examples of the material of the first aluminum alloy and the second aluminum alloys; however, the examples are not limited thereto. For instance, JIS 1000 series aluminum alloys may be used for the material of an aluminum alloy and JIS 1000 series to 8000 series aluminum alloys that are not described in the above embodiments may be used.
(3) Other than the above embodiments, the thickness and the length of the first aluminum alloy, the second aluminum alloy, and the aluminum alloy substrate may be altered as appropriate. For instance, the thickness of the second aluminum alloy may be a half or more of the thickness of the first aluminum alloy. Furthermore, for instance, the aluminum alloy substrate may have a length extending in the X-axis direction and a length extending in the Y-axis direction that are same (a square shape seen from above) or have a length extending in the X-axis direction larger than a length extending in the Y-axis direction. The second aluminum may not be necessarily on only one surface of the rolled plate but may be on both surfaces of the rolled plate. In such a configuration, two or more second aluminum alloys may be joined to the two surfaces of the first aluminum alloy in the joining process.

### EXPLANATION OF SYMBOLS

10, 210, 310...first aluminum alloy, 20, 21, 220, 221, 320...second aluminum alloy, 30...joined member, 100, 200, 300...aluminum alloy substrate

## Claims

1. An aluminum alloy substrate that is a rolled plate, the aluminum alloy substrate comprising:
a first aluminum alloy; and
a second aluminum alloy that includes a chemical component different from a chemical component of the first aluminum alloy and is joined to the first aluminum alloy, wherein
the first aluminum alloy and the second aluminum alloy are joined adjacent to each other along a plate surface direction of the aluminum alloy substrate.

2. The aluminum alloy substrate according to claim 1, wherein purity of aluminum differs between the second aluminum alloy and the first aluminum alloy.

3. The aluminum alloy substrate according to claim 1, wherein a content of an additional element differs between the second aluminum alloy and the first aluminum alloy.

4. The aluminum alloy substrate according to claim 3, wherein a content of an additional element that affects alumite coating differs between the second aluminum alloy and the first aluminum alloy.

5. The aluminum alloy substrate according to claim 3, wherein a content of an additional element that affects mechanical characteristics differs between the second aluminum alloy and the first aluminum alloy.

6. The aluminum alloy substrate according to claim 5, wherein a content of an additional element that affects tensile strength differs between the second aluminum alloy and the first aluminum alloy.

7. The aluminum alloy substrate according to claim 3, wherein a content of an additional element that affects a melting point differs between the second aluminum alloy and the first aluminum alloy.

8. The aluminum alloy substrate according to claim 3, wherein a content of an additional element that affects a crystal form differs between the second aluminum alloy and the first aluminum alloy.

9. The aluminum alloy substrate according to claim 3, wherein a content of an additional element that affects corrosion resistance differs between the second aluminum alloy and the first aluminum alloy.

10. The aluminum alloy substrate according to claim 3, wherein a content of an additional element that affects conductivity differs between the second aluminum alloy and the first aluminum alloy.

11. A method of producing an aluminum alloy substrate comprising:
a joining process of joining a second aluminum alloy having a chemical component different from a chemical component of a first aluminum alloy to the first aluminum alloy and forming a joined member; and
a rolling process of rolling the joined member to be in a plate shape, wherein
in the joining process, the first aluminum alloy and the second aluminum alloy are joined so as to be adjacent to each other along a plate surface direction of the aluminum alloy substrate.
